# EUROPEAN PATENT APPLICATION

(11) **EP 4 354 933 A1**
(43) Date of publication of application: **17.04.2024**
(21) Application number: 22810958.3
(22) Date of filing: 18.03.2022
(51) Int. Cl.: H04W 16/28, H04W 88/04

(54) **WIRELESS COMMUNICATION NODE AND WIRELESS COMMUNICATION METHOD**

(30) Priority: 25.05.2021 JP 2021087552
(71) Applicant: NTT DOCOMO, INC., Tokyo 100-6150 (JP)
(72) Inventor: KURITA Daisuke, Tokyo 100-6150 (JP); HARADA Hiroki, Tokyo 100-6150 (JP); SUN Weiqi, Beijing 100190 (CN); WANG Jing, Beijing 100190 (CN); CHEN Lan, Beijing 100190 (CN)
(74) Representative: Hoffmann Eitle
(86) International application number: PCT/JP2022/012805
(87) International publication number: WO 2022/249681

(57) **Abstract**

A radio communication node receives first beam information on an antenna beam of a first unit of a lower node and holds first beam information and second beam information on an antenna beam of a second unit of a lower node.

## Description

### [Technical Field]

The present disclosure relates to a radio communication node and radio communication method for configuring radio access and radio backhaul.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

For example, in the radio access network (RAN) of the NR, an integrated access and backhaul (IAB) is defined in which radio access to a terminal (User Equipment, UE) and radio backhaul between radio communication nodes such as a radio base station (gNB) are integrated (see Non-Patent Literature 1).

In IAB, an IAB node has a Mobile Termination (MT), which is a function for connecting with a parent node (may be called an IAB donor), and a Distributed Unit (DU), which is a function for connecting with a child node or UE.

In addition, in order to facilitate the simultaneous operation and interference management of the IAB node, a dynamic indication (upstream direction and/or downstream direction) of beam restriction/use/availability is being considered.

### [Citation List]

### [Non-Patent Literature]

### [Non-Patent Literature 1]

3GPP TS 38.213 V 16.1.0, 3rd Generation Partnership Project; Technical Specification Group Radio Access Network; NR; Physical layer procedures for control (Release 16), 3GPP, March 2020

### [Summary of Invention]

The parent node can recognize information about the antenna beam (which may be referred to simply as the beam) of the IAB node (MT) by operation in accordance with the provisions of 3GPP Release 16, but cannot recognize information about the antenna beam of the IAB node (DU).

Accordingly, the following disclosure has been made in light of this situation, and is intended to provide a radio communication node and a radio communication method capable of recognizing information about the antenna beam of the IAB node including the IAB node (DU) in more detail.

An aspect of the present disclosure is a radio communication node (radio communication node 100) including a reception unit (radio communication unit 110) that receives first beam information on an antenna beam of a first unit of a lower node, and a control unit (control unit 190) that holds the first beam information and second beam information on an antenna beam of a second unit of the lower node.

An aspect of the present disclosure is a radio communication node (radio communication node 150) including a reception unit (radio communication unit 110) that receives beam information on an antenna beam of a first unit of the radio communication node from an upper node, and a control unit (control unit 190) that configures the antenna beam used by a second unit of the radio communication node based on the beam information.

An aspect of the present disclosure is a radio communication method including the steps of receiving first beam information on an antenna beam of a first unit of a lower node, and holding the first beam information and second beam information on an antenna beam of a second unit of the lower node.

An aspect of the present disclosure is a radio communication method including the steps of receiving beam information on an antenna beam of a first unit of a radio communication node from a upper node, and configuring the antenna beam used by a second unit of the radio communication node based on the beam information.

### [Brief Description of Drawings]

[FIG. 1] FIG. 1 is an overall schematic configuration diagram of a radio communication system 10.
[FIG. 2] FIG. 2 is a functional block configuration diagram of the radio communication node 50.
[FIG. 3] FIG. 3 is a functional block configuration diagram of the radio communication node 100 and the radio communication node 150.
[FIG. 4] FIG. 4 is a diagram showing an example of a schematic communication sequence concerning the control of the antenna beam BM of the IAB-MT and the IAB-DU.
[FIG. 5] FIG. 5 is a diagram showing an example of the hardware configuration of the radio communication node 50, the radio communication node 100, the radio communication node 150, and the UE200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1) Overall schematic configuration of the radio communication system

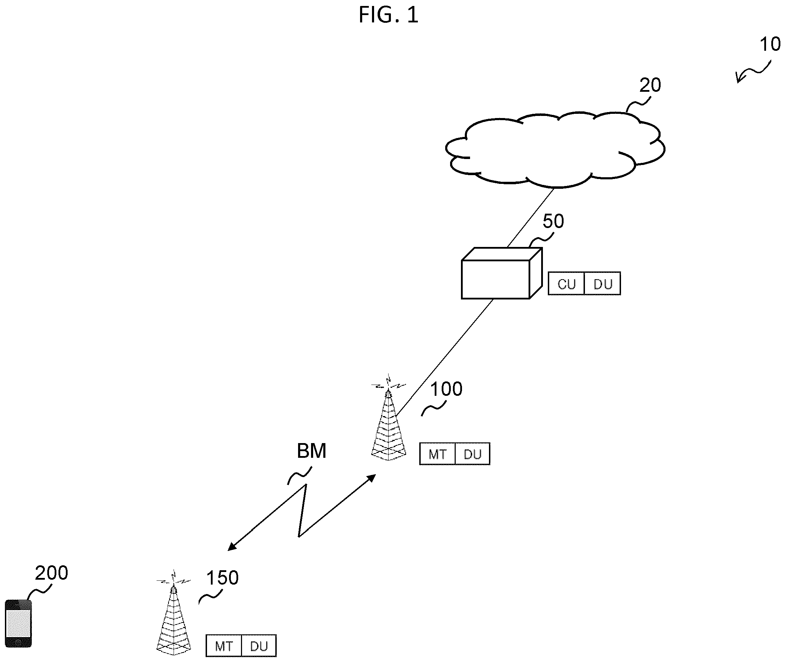

FIG. 1 is an overall schematic configuration diagram of the radio communication system 10 according to the present embodiment. The radio communication system 10 is a radio communication system according to 5G New Radio (NR) and is composed of a plurality of radio communication nodes and terminals. The radio communication system 10 may be a radio communication system according to a system called Beyond 5G, 5G Evolution or 6G.

Specifically, the radio communication system 10 includes a Next Generation-Radio Access Network 20 (hereinafter referred to as the NG-RAN20, a radio communication node 50, a radio communication node 100, a radio communication node 150 and a terminal 200 (UE200, User Equipment).

The radio communication node 50, the radio communication node 100, and the radio communication node 150 can configure the radio access (Access link) with the UE200 and the radio backhaul (Backhaul link) between the radio communication nodes via the cell. For example, a backhaul (transmission path) by the radio link may be configured between the radio communication node 50 and the radio communication node 100 or between the radio communication node 100 and the radio communication node 150.

In this way, the configuration in which the radio access to the UE200 and the radio backhaul between the radio communication nodes are integrated is called Integrated Access and Backhaul (IAB).

The IAB reuses the existing functions and interfaces defined for radio access. In particular, Mobile-Termination (MT), gNB-DU (Distributed Unit), gNB-CU (Central Unit), User Plane Function (UPF), Access and Mobility Management Function (AMF) and Session Management Function (SMF), and corresponding interfaces, such as NR Uu (between MT and gNB/DU), F1, NG, X2 and N4, may be used as baselines.

The radio communication node 100 is connected to the NG-RAN20 and the core network (Next Generation Core (NGC) or 5 GC) via a wired transmission line such as a fiber transport. The NG-RAN and the NGC may be referred to simply as a "network".

In this embodiment, the radio communication node 50 may constitute an IAB donor in the IAB, and the radio communication node 100 may constitute a parent node in the IAB. The radio communication node 150 may constitute an IAB node in the IAB.

The IAB donor (which may be a parent node) may be referred to as an upper node in relation to the IAB node. In addition, the IAB donor may be referred to as a parent node or vice versa. The IAB donor may also have a CU and the parent node may be used simply as a name in relation to the IAB node (or child node) and may not have a CU. The IAB node may be referred to as a subordinate node in relation to the IAB donor (parent node). The child node may also include UE200.

A radio link (Backhaul link) is configured between the IAB donor (or parent node) and the IAB node. Specifically, a radio link called Link_parent may be configured. A backhaul link is configured between the IAB node and the child node. Specifically, a radio link called Link child may be configured.

The Link_parent may consist of a DL Parent BH in the down direction and a UL Parent BH in the up direction. The Link_child may consist of a DL Child BH in the down direction and a UL Child BH in the up direction.

The IAB node (which may include a parent node) has a Mobile Termination (IAB-MT) function for connecting to the IAB donor (or parent node) and a Distributed Unit (IAB-DU) function for connecting to the child node (or UE200). The child node also has a MT and a DU. The IAB donor has a Central Unit (CU) and a DU.

The radio resources utilized by the DU include, from a DU perspective, downlink (DL), uplink (UL), and flexible time-resource (D/U/F), which are classified as either Hard, Soft, or Not Available (H/S/NA) types. Soft (S) also specifies available or not available.

A flexible time-resource (F) is a radio resource (time resource and/or frequency resource) available to either DL or UL. A "hard" is a radio resource always available for a DU child link where the corresponding time resource is connected to a child node or UE, and a "soft" is a radio resource (DU resource) where the availability of the corresponding time resource for a DU child link is explicitly or implicitly controlled by the IAB donor (or parent node).

Furthermore, in the case of soft (S), the radio resource to be notified can be determined based on whether it is IA or INA.

"IA" means that the DU resource is explicitly or implicitly indicated as available. "INA" also means that the DU resource is explicitly or implicitly indicated as unavailable.

In this embodiment, the radio access and radio backhaul can be either half-duplex or full-duplex. Further, time division multiplexing (TDM), space division multiplexing (SDM), and frequency division multiplexing (FDM) can be used as multiplexing systems.

When IAB nodes operate with half-duplex communication, DL Parent BH becomes the receiving (RX) side, UL Parent BH becomes the transmitting (TX) side, DL Child BH becomes the transmitting (TX) side, and UL Child BH becomes the receiving (RX) side. In the case of Time Division Duplex (TDD), the configuration pattern of DL/UL in IAB nodes is not limited to DL-F-UL only, and configuration patterns such as radio backhaul (BH) only and UL-F-DL may be applied. In this embodiment, simultaneous operation of DU and MT of IAB nodes is realized using SDM/FDM.

By controlling radio signals transmitted from a plurality of antenna elements, the radio communication system 10 can support Massive MIMO to generate a more directional antenna beam BM, Carrier Aggregation (CA) to bundle a plurality of component carriers (CCs), and Dual Connectivity (DC) to simultaneously communicate between a UE and each of a plurality of NG-RAN Nodes.

In the radio communication system 10, IAB can also support Dual Connectivity (DC) scenarios, for example, Intra-band DC and Intra-Carrier DC.

An Intra-band DC is a DC within a specific frequency band (band), and multiple component carriers (CCs) may be used. An Intra-Carrier DC is a DC within a band for one CC. An Intra-band DC may include an Intra-Carrier DC.

The radio communication node 150 (IAB node) may be connected to two radio communication nodes 100 to perform a DC. In this case, one radio communication node 100 may constitute a master cell group (MCG) and the other radio communication node 100 may constitute a secondary cell group (SCG) .

### (2) Function block configuration of radio communication system

Next, the function block configuration of the radio communication system 10 will be described. Specifically, the function block configuration of the radio communication node 50, the radio communication node 100, and the radio communication node 150 will be described.

### (2.1) Radio communication node 50

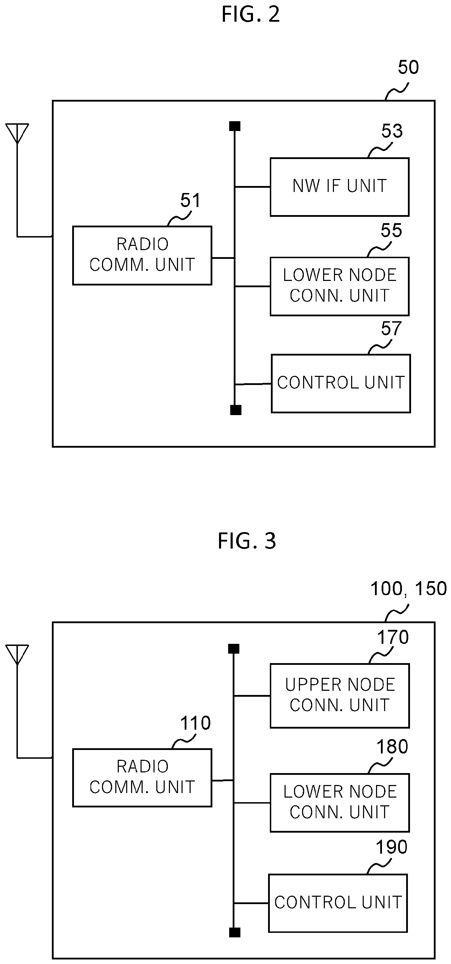

FIG. 2 is a functional block diagram of the radio communication node 50 constituting the IAB donor. As shown in FIG. 2, the radio communication node 50 includes a radio communication unit 51, a NW IF unit 53, a lower node connection unit 55, and a control unit 57.

The radio communication unit 51 transmits and receives radio signals in accordance with the NR. The radio communication unit 51 controls radio (RF) signals transmitted from a plurality of antenna elements to cope with Massive MIMO, which generates a beam with higher directivity, carrier aggregation (CA), which uses a plurality of component carriers (CCs) bundled together, and the like. The radio communication unit 51 may or may not cope with DC.

The NW IF unit 53 provides a communication interface for realizing connection with the NGC side or the like. For example, the NW IF unit 53 may include interfaces such as X2, Xn, N2, N3, etc.

The lower node connection unit 55 may provide an interface, etc., that provides a connection to a lower node than the IAB donor. The lower node means a radio communication node located on the end user side (which may be called the downstream side or the downstream side) than the IAB donor, and may include the radio communication node 100 (the parent node) and the radio communication node 150 (the IAB node).

The radio link in the lower node (the parent node) may mean a radio link between the parent node (radio communication node 100) and the IAB node (radio communication node 150), rather than a radio link between the IAB donor (radio communication node 50) and the parent node (radio communication node 100).

The control unit 57 executes control of each function block constituting the radio communication node 50. In particular, in this embodiment, the control unit 57 executes DC and can execute control of DC between the radio communication node 100 constituting the master node (MN) and the radio communication node 100 constituting the secondary node (SN).

The control unit 57 also controls notification of information (beam information) about the antenna beam BM used by the IAB nodes (IAB-MT and IAB-DU). Specifically, the control unit 57 can notify the beam information applied to the parent node and/or the IAB node via the lower node connection unit 55.

In order to receive the PDSCH (Physical Downlink Shared Channel) or PDCCH (Physical Downlink Control Channel) demodulation reference signal (DMRS), the TCI (Transmission Configuration Indication) state is configured in the NR (If not configured, it can be a QCL relationship with the SSB index of recent PRACH (Physical Random Access Channel) transmissions.).

The TCI state may mean that the control element (MAC CE) of the radio resource control layer (RRC) or the medium access control layer (MAC) explicitly instructs the configuration. The QCL relationship may include both cases where the TCI state is explicitly configured and cases where the TCI state is not configured. The QCL/TCI state/beam (antenna beam) may be interchanged.

The beam information may include any such information about the QCL/TCI state/beam. In short, it may be an index (SSB index) that identifies an SSB (SS/PBCH Block) that is a block of a synchronization signal/notification channel consisting of an SS (Synchronization Signal) and a PBCH (Physical Broadcast CHannel). Beam information will be described later.

### (2.2) Radio communication node 100 and radio communication node 150

FIG. 3 is a functional block diagram of a radio communication node 100 constituting a parent node and a radio communication node 150 constituting an IAB node. The functions of the radio communication node 100 will be mainly described below.

As shown in FIG. 3, the radio communication node 100 includes a radio communication unit 110, an upper node connection unit 170, a lower node connection unit 180, and a control unit 190.

The radio communication unit 110 transmits and receives radio signals in accordance with the NR. By controlling radio (RF) signals transmitted from a plurality of antenna elements, the radio communication unit 110 can cope with Massive MIMO, which generates a beam with higher directivity, carrier aggregation (CA), which uses a plurality of component carriers (CCs) bundled together, and dual connectivity (DC), which simultaneously communicates between a UE and two NG-RAN nodes.

The radio communication unit 110 may also receive beam information about the antenna beam BM. Specifically, the radio communication unit 110 may receive beam information (first beam information) about the antenna beam BM of the DU (first unit) of the lower node (which may include the IAB node). In this embodiment, the radio communication unit 110 may constitute a reception unit.

Here, the IAB-DU is associated with the first unit, but the first unit may be called by another name, such as a downstream unit or a distributed unit. The IAB-MT is associated with the second unit, but the second unit may be called by another name, such as an upstream unit or a terminal termination unit.

In the case of the IAB node (radio communication node 150), the radio communication unit 110 may receive beam information about the antenna beam BM of the IAB-DU of its own node from the upper node (parent node).

The upper node connection unit 170 provides an interface for realizing connection with a node higher than the parent node. Note that the upper node means a radio communication node located on the network, specifically, the core network side (which may be called the upstream side) than the parent node.

In the case of the IAB node (radio communication node 150), the upper node connection unit 170 provides an interface for realizing connection with a node higher than the IAB node. In the case of the IAB node, the upper node means a radio communication node located on the network, specifically, the core network side (which may be called the upstream side) than the IAB node.

Specifically, the upper node connection unit 170 provides the function of Mobile Termination (MT). That is, the upper node connection unit 170 may be used for connection with the upper node in this embodiment.

The lower node connection unit 180 provides an interface for realizing connection with the lower node than the parent node. The lower node means a radio communication node located on the end user side (may be called the downstream side) than the IAB node.

Specifically, the lower node connection unit 180 provides the function of a distributed unit (DU). That is, in this embodiment, the lower node connection unit 180 is used for connection with an IAB node or a child node (which may be a UE 200) constituting the lower node.

The control unit 190 executes control of each function block constituting the radio communication node 150. In particular, in this embodiment, the control unit 190 can execute control of the antenna beam BM of the IAB node (child node).

Specifically, the control unit 190 may hold the beam information (first beam information) of the antenna beam BM of the IAB-DU. The control unit 190 may hold the beam information received from the CU or the like via the upper node connection unit 170.

Further, the control unit 190 may recognize the beam information (second beam information) concerning the second unit of the lower node (IAB node), that is, the antenna beam BM of the IAB-MT, by the operation specified in the 3GPP TS38.213.

The control unit 190 may hold the beam information (first beam information) concerning the antenna beam BM of the IAB-DU and the beam information (second beam information) concerning the antenna beam BM of the IAB-MT.

The control unit 190 may configure the antenna beam BM used by the IAB-DU based on the first beam information and the second beam information.

In this case, the antenna beam BM used by the IAB-DU may be different from the antenna beam BM used by the IAB-MT, or may overlap partially or completely.

The control unit 190 may configure the antenna beam BM used by the IAB-DU, depending on the resource type applied to the IAB-DU (such as D/U/F and/or H/S/NA) and the channel assigned to the IAB-DU or IAB-MT.

In the case of the IAB node (radio communication node 150), the control unit 190 may configure the antenna beam BM used by the IAB-MT of its own node based on the beam information received from the parent node (radio communication node 100).

In this case, the antenna beam BM used by the IAB-MT may be different from the antenna beam BM used by the IAB-DU, or may overlap partially or completely.

### (3) Operation of radio communication system

Next, the operation of the radio communication system 10 will be described. Specifically, the operation related to the control of the antenna beam BM of the IAB-MT and the IAB-DU will be described.

### (3.1) Operation Overview

Regarding simultaneous transmission between IAB-MT and IAB-DU, it is assumed that the parent node instructs the antenna beam of the IAB-DU in addition to the antenna beam of the IAB-MT as a countermeasure against interference of the transmitted signal of the IAB-DU with the IAB-MT when receiving the DU of the parent node.

The intention of such instruction is that the parent node dynamically instructs the child node (which may include the IAB node) to a set of desirable and/or undesirable (Hereinafter referred to as desirable (or undesirable)) antenna beams BM in the IAB-DU to realize simultaneous transmission of the IAB-MT and the IAB-DU.

The parent node may measure interference between the transmission (Tx) beam of the MT and the transmission (Tx) beam of the DU. Thus, the parent node can indicate to the IAB node which DU Tx beam causes a large interference with the MT Tx beam. How the parent node measures the interference depends on the implementation.

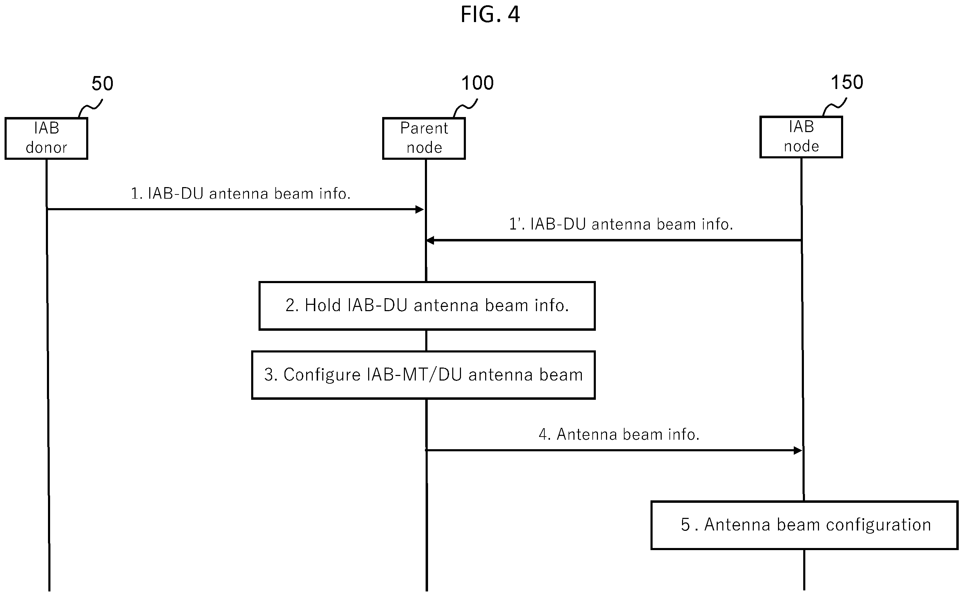

FIG. 4 shows an example of a schematic communication sequence for controlling the antenna beam BM of the IAB-MT and the IAB-DU. As shown in FIG. 4, the parent node can notify the IAB-DU of the antenna beam to be used. Specifically, the parent node and the IAB node may operate as follows:

▪Example 0: The parent node holds information about the antenna beam of the IAB node (child node), which may, for example, be notified by the CU or reported by the IAB node (Step 1 (1 '), 2 of FIG. 4).

Note that the parent node can recognize information about the antenna beam of the IAB-MT by an existing operation (see 3GPP TS 38.213). On the other hand, information about the antenna beam of the IAB-DU may be recognized by operation example 0.

Using the beam information of the IAB-MT and the IAB-DU obtained by operation example 0 and the existing operation with information about the antenna beam of the IAB-MT, the upper node can recognize, for example, a combination of the antenna beam of the IAB-MT in which the antenna beam of the IAB-DU becomes an interference.

To avoid the use of such a combination in the IAB node, as in operation example 1, the upper node (such as the parent node) may notify (instruct) the IAB node of information about the antenna beam (steps 3 and 4 in FIG. 4).

▪(Operation example 1): The parent node configures the desired (or undesirable) beam as the antenna beam configured by the IAB-DU for the IAB node (the child node).

▪(option 1): The desired (or undesirable) antenna beam of the IAB-DU for simultaneous transmission is configured for each MT serving cell.

▪(Option 2): For each SSB/CSI (Channel State Information)-RS/SRS (Sounding Reference Signal), the antenna beam of the IAB-DU is configured, which is desirable (or undesirable) for simultaneous transmission.

▪(Option 3): For each CB (Code Block)/NCB (Non CB) PUSCH(Physical Uplink Shared Channel) transmission, the antenna beam of the IAB-DU is configured, which is desirable (or undesirable) for simultaneous transmission, for each SRI specified by the SRS resource indicator (SRI) field of the Downlink Control Information (DCI).

▪(Option 4): For each PUCCH (Physical Uplink Control Channel)-spatialRelationInfo configured for the IAB-MT, the antenna beam of the IAB-DU is configured, which is desirable (or undesirable) for simultaneous transmission.

▪(Option 5): For each Rel-17 UL TCI state or DL/UL joint TCI state configured for the IAB-MT, the antenna beam of the IAB-DU is configured, which is desirable (or undesirable) for simultaneous transmission.

▪(Option 6): For each TCI code point configured in the TCI field of the DCI, the antenna beam of the IAB-DU is configured, which is desirable (or undesirable) for simultaneous transmission.

The operation of the IAB node (step 5 in FIG. 4) may be as follows.

▪In the IAB-MT transmission, the IAB node does not use a beam that has been notified as undesirable to the antenna beam of the IAB-DU.

▪In the IAB-MT transmission, the IAB node uses a beam that has been notified as desired to the antenna beam of the IAB-DU.

▪The configuration of the antenna beam of the IAB-DU may depend on the implementation of the IAB-DU.

▪(Operation example 2): The operation of the IAB node in operation example 1 is configured according to the resource type (H/S/NA) or channel of the IAB-DU and the channel of the MT. The operation example 1 is applied when the IAB-DU and the IAB-MT operate simultaneously.

### (3.2) Operation example

### (3.2.0) Example 0

The parent node may recognize the transmission configuration of the SSB (which may be interpreted as an antenna beam) of each DU cell of the child node DU. Information on the transmission configuration may be provided by the IAB donor CU via F1-AP signaling. For example, an IAB STC (SSB transmission configuration) Info IE (information element) may be used.

Alternatively, the IAB-MT may provide the information to the parent node. The information may include the number of SSBs, the SSB index, the position of the SSB in time direction (For example, periodicity and offset), the position of the SSB in frequency direction, and a bitmap indicating whether the SSB is transmitted or needs to be measured (such as SSB-ToMeasure IE in 3GPP TS 38.331). It should be noted that it may include the same information as IAB STC Info IE of 3GPP TS 38.473) or the like (at least any of them may be included).

The parent node may recognize the CSI-RS/SRS resource configuration of each DU cell of the child node DU. The configuration information may be provided by the IAB donor CU via F1-AP signaling.

Alternatively, the information may be provided by the IAB-MT to the parent node. The information may include the number of CSI-RS resources, the index of the CSI-RS resources, and the position of the CSI-RS resources in the time direction (For example, periodicity and offset), the position of the CSI-RS resources in the frequency, the power control offset from the PDSCH RE (Resource Element) to the CSI-RS RE, the power control offset from the CSI-RS RE to the SSS RE, the QCL information of the CSI-RS resources (May contain information similar to CSI-ResourceConfig/NZP-CSI-RS-ResourceSet/NZP-CSI-RS-Resource IE in TS 38.331), and the like (at least any of them may be included).

Alternatively, the parent node may recognize the relationship between the MT beam and the DU beam. For example, it may include whether the MT beam and the DU beam are beams transmitted from the same antenna panel and whether the MT beam and the DU beam can be simultaneously transmitted.

In this operation example, with regard to the MT beam, SSB/CSI-RS/SRS/Release (Rel)-17 UL TCI/Rel-17 of the SRI field of the DCI/code point of the TCI field of the DCI of the MT serving cell joint UL and UL TCI/code point may be referred to.

DU beam may be referred to SSB/CSI-RS/SRS of the DU cell.

### (3.2.1) Example 1

The parent node may indicate to the child node a set of desirable (or undesirable) beams in the child node's IAB-DU.

The IAB-DU beam may be supplied as DU SSB index, DU cell index and (DU ID). Alternatively, the IAB-DU beam may be supplied as DU CSI-RS/SRS resource index, DU cell index and (DU ID). The DU ID may be necessary or unnecessary.

▪(Option 1): A set of desirable (or undesirable) beams in the IAB-DU is provided for each MT serving cell.

At least one of RRC, MAC CE or DCI may be used for the indication. The IAB node may also operate as follows:

▪If there is a configured/indicated MT transmission in the MT serving cell, the DU may not perform a transmission having the same spatial relationship to the MT serving cell as the DU beam indicated as "undesirable."

▪Alternatively, if configured/indicated MT transmissions are present in the MT serving cell, the DU may only perform transmissions that have the same spatial relationship with the DU beam indicated as "preferred" to the MT serving cell.

▪There is no restriction on the spatial relationship of DU transmissions (depending on the DU implementation).

Note that a set of desirable (or undesirable) beams in the IAB-DU may be provided for a group of MT serving cells.

▪(Option 2): A set of desirable (or undesirable) beams in the IAB-DU is provided for each SSB/CSI-RS/SRS in each MT serving cell.

The SSB/CSI-RS/SRS is an RS (reference signal) that serves as a basis for the spatial relationship of UL transmission in the MT, specifically, the SSB/CSI-RS is transmitted from the parent node and received in the MT. The SRS is transmitted from the MT and received at the parent node.

It may be applied only to the SRS used as "beam management," "CB," or "NCB." Alternatively, it may be applied only to the "periodic," "semi-persistent," or "non-periodic" SRS, or it may be applied only to the "periodic," "semi-persistent," or "non-periodic" CSI-RS.

At least one of RRC, MAC CE, or DCI may be used in the instruction. The IAB node may also operate as follows:
▪If there is an MT transmission configured/directed with the same spatial relationship as the SSB/CSI-RS/SRS of the MT serving cell, the DU may not configure/direct the transmission with the same spatial relationship as the DU beam designated "undesirable" for the SSB/CSI-RS/SRS of the MT.

-Alternatively, if there is an MT transmission configured/indicated in the same spatial relationship as the SSB/CSI-RS/SRS of the MT serving cell, the DU may perform only that transmission in the same spatial relationship as the DU beam indicated as "preferred" to the SSB/CSI-RS/SRS of the MT.

▪The spatial relationship of the DU transmission is not limited (depending on the DU implementation).

Note that a set of desirable (or undesirable) beams in the IAB-DU may be provided for a group of SSB/CSI-RS/SRS.

▪(Option 3): For CB/NCB PUSCH transmissions, a set of desirable (or undesirable) beams in the IAB-DU is provided for each SRI code point in the SRI field in the DCI. For CB, the SRI code point may indicate a CB SRS resource). For NCB, the SRI code point may indicate one or more NCB SRS resources and a combination of NCB SRS resources.

At least one of RRC, MAC CE or DCI may be used in the instruction. The IAB node may also operate as follows:

▪In the presence of an MT PUSCH transmission configured/directed at an SRI code point in the SRI field, the DU may not perform a transmission with the same spatial relationship to the MT SRI code point as the DU beam that is designated as "undesirable."

▪In the presence of an MT PUSCH transmission configured/directed at an SRI code point in the SRI field, the DU may only perform a transmission with the same spatial relationship to the MT SRI code point as the DU beam that is designated as "preferred."

▪There is no restriction on the spatial relationship of DU transmissions (depending on the DU implementation).

Note that a set of desirable (or undesirable) beams in the IAB-DU may be provided for group code points in the SRI.

▪(Option 4): A set of desirable (or undesirable) beams in the IAB-DU is provided for each PUCCH-spatialRelationInfo in each MT serving cell.

Note that the PUCCH-spatialRelationInfo is specified in 3GPP TS38.331 and may be used to configure the spatial configurations of the PUCCH transmission and the parameters of the PUCCH power control 3GPP TS38.213 9.2.2).

At least one of RRC, MAC CE or DCI may be used for the indication. The IAB node may also operate as follows:
▪In the presence of an MT PUCCH transmission configured/directed by PUCCH-spatialRelationInfo, the DU may not perform a transmission having the same spatial relationship as the DU beam directed as "undesirable" for the MT pucch-spatialRelation.
-In the presence of MT PUCCH transmissions configured/directed by PUCCH-spatialRelationInfo, the DU may only perform transmissions having the same spatial relationship as the DU beam directed as "preferred" to the MT pucch-spatialRelation.
▪There is no restriction on the spatial relationship of DU transmissions (depending on the DU implementation).

Note that a set of desirable (or undesirable) beams in the IAB-DU may be provided for a group of PUCCH spatial relationships.
▪(Option 5): A set of desirable (or undesirable) beams in the IAB-DU is provided for each Rel-17 UL TCI state, or joint DL/UL TCI state, of each MT serving cell.

Note that UL TCI state, joint DL/UL TCI state, configured by the RRC for each, or UL TCI state, joint DL/UL TCI state, activated by the MAC CE for each, may be used.

At least one of RRC, MAC CE or DCI may be used in the instruction. The IAB node may also operate as follows:
▪In the presence of an MT transmission configured/directed with a UL TCI or joint DL/UL TCI, the DU may not perform a transmission having the same spatial relationship as a DU beam directed as "undesirable" to the UL TCI or joint DL/UL TCI of the MT.
▪In the presence of an MT transmission configured/directed with a UL TCI or joint DL/UL TCI, the DU may perform only a transmission having the same spatial relationship as a DU beam directed as "preferred" to the UL TCI or joint DL/UL TCI of the MT.
▪There is no restriction on the spatial relationship of DU transmissions (depending on the DU implementation).

Note that a set of desirable (or undesirable) beams in the IAB-DU may be provided for a group of UL TCIs or MT joint DL/UL TCIs.
▪(Option 6): A set of desirable (or undesirable) beams in the IAB-DU is provided for each TCI code point in the TCI field in the DCI (Each TCI code point represents a Rel-17 UL TCI or a Rel-17 joint UL/DL TCI) of each MT serving cell.

At least one of RRC, MAC CE or DCI may be used for the indication. The IAB node may also operate as follows:
▪In the presence of an MT transmission configured/indicated by a TCI code point in the TCI field, the DU may not perform a transmission having the same spatial relationship to the MT TCI code point as the DU beam indicated as "undesirable."
▪In the presence of an MT transmission configured/indicated by a TCI code point in the TCI field, the DU may perform only a transmission having the same spatial relationship to the MT TCI code point as the DU beam indicated as "preferred."
▪There is no restriction on the spatial relationship of DU transmissions (depending on the DU implementation).

Note that a set of desirable (or undesirable) beams in the IAB-DU may be provided for a group of TCI code points in the MT.

At least one of the options 1-6 described above may be supported. In addition, at least one of the following options may be supported:
▪Define the number (or maximum number) of MT serving cells that can provide a set of desirable (or undesirable) beams in the IAB-DU.
▪Define the number (or maximum number) of MT beams that can provide a set of desirable (or undesirable) beams in the IAB-DU.

In this case, it may be further defined as follows:
▪Define the number (or maximum number) of MT beams for each MT.
▪Alternatively, define the number (or maximum number) of MT beams per MT serving cell.

Note that the MT beams may refer to the MT SSB/CSI-RS/SRS/SRI code point/PUCCH-spatialrelationInfo/UL TCI/joint UL or DL TCI/TCI code point as in Option 2-6.
▪For each MT, MT serving cell or MT beam, define the number (or maximum number) of DU beams that can be indicated as desirable (or undesirable).

In this case, it may be further defined as follows:
▪Define the number (or maximum number) of DU beams per DU.
▪Alternatively, define the number (or maximum number) of DU beams per DU cell.
▪Whether the indication of a set of desirable (or undesirable) beams in the IAB-DU is reported by the IAB node and/or constituted by the parent node/IAB donor CU.

In this case, it may be further defined by at least:
▪ MT Units
▪ MT Serving Cell Units
▪ DU Units
▪ DU Cell Units

### (3.2.2) Modification of operation example 1

As an example of change in operation example 1, the DU beam may be associated with the MT beam. The association may be configured by signaling in the higher layer (For example, RRC). The association may be recognized by the parent and child nodes.

Instead of indicating the DU SSB/CSI-RS/SRS resource index, DU cell index and (DU ID), the parent node may indicate the desired (or undesirable) beam in the child node's IAB-DU by indicating the desired (or undesirable) MT beam (which may be implicit).

If the MT beam is indicated as undesirable, the DU may not perform the transmission in the spatial relationship as the DU beam associated with the MT beam when there is an MT transmission configured/indicated by the spatial relationship of the MT beam.

On the other hand, if the MT beam is indicated as desirable, the DU may perform the transmission in the spatial relationship as the DU beam associated with the MT beam when there is an MT transmission configured/indicated by the spatial relationship of the MT beam.

The {MT Beam, DU Beam} pair may also be configured by signaling in the higher layer and recognized by the parent node and its child nodes.

Instead of indicating the DU SSB/CSI-RS/SRS resource index, DU cell index and (DU ID), the parent node may indicate the preferred and/or undesirable beam by indicating the preferred and/or undesirable {MT Beam, DU Beam} pair in the IAB-DU of the child node (which may be implicit).

If the {MT Beam, DU Beam} pair is indicated as undesirable, the DU may not perform the transmission in the spatial relationship as the DU beam in the beam pair when there is an MT transmission configured/indicated by the spatial relationship of the MT beams in the beam pair.

On the other hand, if the {MT Beam, DU Beam} pair is indicated as desirable, the DU may perform the transmission in the spatial relationship as the DU beam in the beam pair when there is an MT transmission configured/indicated by the spatial relationship of the MT beams in the beam pair.

### (3.2.3) Example 2

The behavior (operation) of the IAB node in Example 1 may be different depending on options.

For example, it may be applied to different DU time-domain (H/S/NA) resource types, i.e., DU Hard/soft/NA/soft-IA/soft-INA symbols.

Alternatively, it may be applied to symbols with different DU frequency domain (H/S/NA) resource types, i.e., DU Hard/soft/NA/soft-IA/soft-INA frequency resources.

Alternatively, it may be applied to different DU channels/RS, i.e., PDSCH/PDCCH/(periodic/semi-permanent/aperiodic) CSI-RS/SSB.

Alternatively, it may be applied to different MT channels/RS, i.e., PUSCH/PUCCH/PRACH/(periodic/semi-permanent/aperiodic) SRS/(beam management/codebook/non-codebook) SRS.

Note that operation example 1 may be applied only to MT serving cells and DU cells that simultaneously support MT transmission and DU transmission.

### (3.2.4) IAB Node Capabilities

The following capabilities may be defined for IAB nodes:
▪ Support for simultaneous transmission of MT and DU
▪ Support for limitation of DU beam

The IAB node may report this capability to the network. Such capability reporting may also be applied only if the corresponding IAB node capability and/or higher layer parameters are configured.

### (4) Operational effects

According to the above-described embodiments, the following effects can be obtained. Specifically, the parent node (radio communication node 100) can hold the beam information about the antenna beam BM of the IAB-DU (first beam information) and the beam information about the antenna beam BM of the IAB-MT (second beam information).

The IAB node (radio communication node 150) can configure the antenna beam BM to be used by the IAB-MT of its own node based on the beam information received from the parent node (radio communication node 100).

Therefore, the parent node can recognize information about the antenna beam of the IAB node including the IAB node (DU) in more detail, and can indicate an appropriate antenna beam to the IAB node. Thus, the interference of the IAB-DU transmission signal with the IAB-MT transmission signal can be avoided more reliably.

### (5) Other Embodiments

Although the contents of the present invention have been described by way of the embodiments, it is obvious to those skilled in the art that the present invention is not limited to what is written here and that various modifications and improvements thereof are possible.

For example, although the names of the parent node, the IAB node, and the child node were used in the above embodiment, the names may be different insofar as the configuration of the radio communication node in which the radio backhaul between the radio communication nodes such as gNB and the radio access to the terminal are integrated is adopted. For example, the node may be simply called the first node, the second node, or the upper node, the lower node, the relay node, the intermediate node, and the like.

Furthermore, the radio communication node may be referred to simply as a communication device or communication node, or may be read as a radio base station.

In the foregoing description, configure, activate, update, indicate, enable, specify, and select may be read as each other. Similarly, link, associate, correspond, and map may be read as each other, and allocate, assign, monitor, and map may be read as each other.

In addition, specific, dedicated, UE-specific, and UE-specific may be read as each other. Similarly, common, shared, group-common, UE-common, and UE-shared may be read as each other.

In the present disclosure, terms such as "precoding," "precoder," "weight," "Quasi-Co-Location (QCL)," "Transmission Configuration Indication state(TCI state)," "spatial relation," "spatial domain filter," "transmit power," "phase rotation," "antenna port," "antenna port group," "layer," "number of layers," "rank," "resource," "resource set," "resource group," "beam," "beam width," "beam angle," "antenna," "antenna element," "panel," and the like may be used interchangeably.

The block configuration diagrams (FIGS. 2 and 3) used for the description of the above-described embodiment show blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (configuration part) that functions transmission is called a transmission unit (transmitting unit) or a transmitter. As described above, the method of realization of both is not particularly limited.

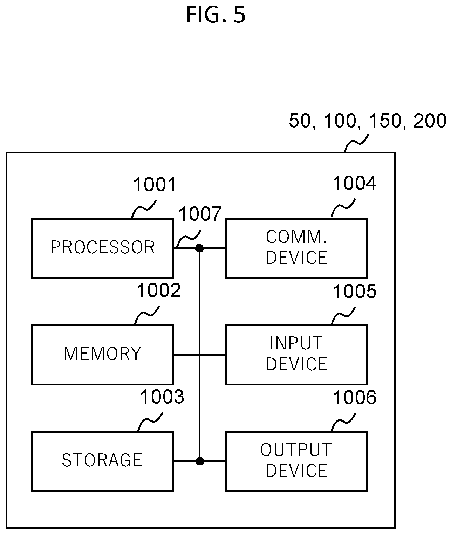

Furthermore, the radio communication node 50, the radio communication node 100, the radio communication node 150 and the UE200 (the device) may function as a computer for processing the radio communication method of the present disclosure. FIG. 5 is a diagram showing an example of the hardware configuration of the device. As shown in FIG. 5, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see FIGS. 2 and 3) is implemented by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU) including an interface to peripheral devices, a controller, a computing device, a register, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

In addition, the device may be configured to include hardware such as a microprocessor, a digital signal processor (DSP), an application specific integrated circuit (ASIC), a programmable logic device (PLD), a field programmable gate array (FPGA), or the like, which may provide some or all of each functional block. For example, the processor 1001 may be implemented by using at least one of these hardware.

Further, the notification of information is not limited to the aspects/embodiments described in the present disclosure and may be carried out using other methods. For example, the notification of information may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals or combinations thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing steps, sequences, flowcharts, etc., of each of the embodiments/embodiments described in the present disclosure may be reordered as long as there is no conflict. For example, the method described in the present disclosure presents elements of various steps using an exemplary sequence and is not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the embodiments/embodiments described in the present disclosure may be used alone, in combination, or alternatively with execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base station. In this case, the base station may have the function of the mobile station.

A radio frame may be composed of one or more frames in the time domain.

Each frame or frames in the time domain may be referred to as a subframe. A subframe may be further configured by one or more slots in the time domain.

The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in units of time greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe in an existing LTE (1 ms), a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain.

The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C."
Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
50 radio communication node
51 radio communication unit
53 NW IF unit
55 lower node connection unit
57 control unit
100 radio communication node
110 radio communication unit
150 radio communication node
170 upper Node connection unit
180 lower Node connection unit
190 control unit
200 UE
1001 processor
1002 memory
1003 storage
1004 communication device
1005 input device
1006 output device
1007 bus

## Claims

1. A radio communication node comprising:
a reception unit that receives first beam information on an antenna beam of a first unit of a lower node; and
a control unit that holds the first beam information and second beam information on an antenna beam of a second unit of the lower node.

2. The radio communication node according to claim 1, wherein the control unit configures the antenna beam used by the first unit based on the first beam information and the second beam information.

3. The radio communication node according to claim 1, wherein the control unit configures the antenna beam used by the first unit according to a resource type applied to the first unit and a channel assigned to the first unit or the second unit.

4. A radio communication node comprising:
a reception unit that receives beam information on an antenna beam of a first unit of the radio communication node from an upper node; and
a control unit that configures the antenna beam used by a second unit of the radio communication node based on the beam information.

5. A radio communication method comprising the steps of:
receiving first beam information on an antenna beam of a first unit of a lower node; and
holding the first beam information and second beam information on an antenna beam of a second unit of the lower node.

6. A radio communication method comprising the steps of:
receiving beam information on an antenna beam of a first unit of a radio communication node from an upper node; and
configuring the antenna beam used by a second unit of the radio communication node based on the beam information.
